# EUROPÄISCHE PATENTSCHRIFT

(11) **EP 2 977 245 B1**
(45) Veröffentlichungstag und Bekanntmachung des Hinweises auf die Patenterteilung: **28.08.2019**
(21) Anmeldenummer: 15001659.0
(22) Anmeldetag: 03.06.2015
(51) Int. Cl.: B60J 5/04, E05B 83/44

(54) **TÜRE FÜR EIN KRAFTFAHRZEUG MIT ZUSÄTZLICHER AUFBRUCHSICHERUNG**
DOORS FOR A MOTOR VEHICLE WITH ADDITIONAL BURGLAR PROOFING
PORTES POUR VEHICULE AUTOMOBILE PRESENTANT UNE SECURITE ANTI-VOL SUPPLEMENTAIRE

(30) Priorität: 22.07.2014 DE 102014011102
(43) Veröffentlichungstag der Anmeldung: 27.01.2016
(73) Patentinhaber: MAN Truck & Bus SE, 80995 München (DE)
(72) Erfinder: Bullacher, Florian, 82166 Gräfelfing (DE)
(74) Vertreter: v. Bezold & Partner Patentanwälte - PartG mbB

(56) Entgegenhaltungen:
- WO-A1-01/76900
- DE-A1- 19 821 077
- DE-U1- 29 607 349
- DE-U1-202010 000 432
- US-A- 3 164 409

## Beschreibung

Die Erfindung betrifft eine Türe für ein Kraftfahrzeug, insbesondere ein Fahrerhaus eines Nutzfahrzeugs, vorzugsweise eines Lastkraftwagens.

In manchen Regionen ist es ratsam, dass insbesondere Lastkraftwagen-Fahrer die Türen ihres Fahrerhauses für die Übernachtung oder Ruhepausen zusätzlich zum eigentlichen Türschloss von Innen verriegeln, weil die Türschlösser allein keinen ausreichenden Aufbrechschutz liefern. Aus der Praxis sind einige Türinnenverriegelungen zusätzlich zum eigentlichen Türschloss bekannt, die allerdings relativ komplex und in der Folge relativ teuer sind. Eine Türe gemäß dem Oberbegriff des Anspruchs 1 ist vom Dokument US 3 164 409 A bekannt.

Eine Aufgabe der Erfindung ist es, eine alternative Türsicherung für eine Fahrerhaustüre zusätzlich zu dem eigentlichen Türschloss zu schaffen, insbesondere eine preiswerte Türsicherung zusätzlich zu dem eigentlichen Türschloss.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft eine Türe für ein Kraftfahrzeug, vorzugsweise ein Fahrerhaus eines Nutzfahrzeugs, insbesondere eines Lastkraftwagens. Die Türe umfasst ein Türschloss zum Verschließen der Türe und eine Tür-Innenseite, insbesondere eine Tür-Innenverkleidung. Die Türe zeichnet sich insbesondere dadurch aus, dass sie eine Festmachstelle für ein Sicherungselement zum Sichern der Türe zweckmäßig von Innen gegen unerlaubtes Aufbrechen zusätzlich zu dem Türschloss aufweist. Die Festmachstelle ist zweckmäßig hinter der Tür-Innenseite angeordnet ist, wobei die Tür-Innenseite eine Markierung zum Auffinden der Festmachstelle aufweist.

Erst wenn ein Nutzer (Fahrer) weiß, dass er die Türe zusätzlich zum Türschloss gegen unerlaubtes Aufbrechen sichern möchte, bohrt er z. B. mit einer Handbohrmaschine ein Loch in die Tür-Innenseite, so dass ein Zugriff auf die Festmachstelle möglich wird. Daraufhin kann die Festmachstelle zweckmäßig durch Festmachen eines Sicherungselements genutzt werden, um die Türe von Innen gegen unerlaubtes Aufbrechen zu sichern.

Wird keine zusätzliche Sicherung benötigt, ist letztgenanntes Vorgehen nicht erforderlich. Die Festmachstelle kann dann unsichtbar hinter der Tür-Innenseite verborgen bleiben.

Die Festmachstelle ist erfindungsgemäß hinter der Markierung positioniert.

Erfindungsgemäß trifft die Mittelachse der Festmachstelle auf die Markierung.

Des Weiteren ist es möglich, dass die Mittelachse der Festmachstelle sich zumindest nahezu horizontal erstreckt, nämlich mit einer Abweichung von maximal +/-15°, +/- 10° oder +/- 5°. Alternativ oder ergänzend kann die Mittelachse der Festmachstelle zumindest nahezu rechtwinklig auf die Tür-Innenseite treffen, nämlich mit einer Abweichung von maximal +/-15°, +/-10° oder +/- 5°. Dadurch kann insbesondere gewährleistet werden, dass das Sicherungselement über das an der Markierung anzubringende Loch leicht die Festmachstelle findet. Es ist möglich, dass die Markierung mechanisch ausgeführt ist, z. B. als Vertiefung, und/oder farblich gekennzeichnet ist. Die mechanische Markierung kann z. B. als Körnerpunkt oder andere Vertiefung (z. B. kreuzförmige Ritze) ausgebildet sein, so dass die Markierung zweckmäßig zugleich das Herstellen des Lochs für den Zugriff auf die Festmachstelle erleichtert.

Erfindungsgemäß umfasst die Festmachstelle ein Innengewinde oder ist eine Mutter. Die Mutter ist vorzugsweise eine Schweißmutter, die an die Tür-Tragstruktur geschweißt ist. Das Sicherungselement weist vorzugsweise ein Außengewinde auf.

Das Sicherungselement kann z. B. ein Ring- oder Hakenteil sein, vorzugsweise mit Bund, das zweckmäßig an der Festmachstelle befestigbar ist. Das Ringteil kann z. B. als geschlitztes oder nicht-geschlitztes Ringteil ausgeführt sein.

Das Ringsteil ist vorzugsweise eine Ringschraube.

Das Hakenteil ist vorzugsweise eine Hakenschraube.

Ebenso kann das Sicherungselement ein umklappbarer, z. B. dreh- oder schwenkbarer Riegel sein, der vorzugsweise an der Festmachstelle befestigbar ist und in eine Sicherungsstellung umlegbar ist, um vorzugsweise mit einem fahrerhausfesten Teil zu verriegeln.

Die Türe umfasst erfindungsgemäß eine Tür-Tragstruktur, z. B. ein Tür-Gerippe. Die Festmachstelle ist vorzugsweise an der Tür-Tragstruktur ausgebildet, z. B. angeschweißt oder anderweitig befestigt. Die Tür-Tragstruktur ist vorzugsweise der Türrohbau.

Die Tür-Tragstruktur umfasst erfindungsgemäß eine Säule, vorzugsweise eine Tür-B-Säule, an der die Festmachstelle ausgebildet ist.

Zu erwähnen ist noch, dass die zusätzliche Türinnensicherung zweckmäßig nur von Innen betätigt werden kann.

Zu erwähnen ist außerdem, dass die Tür-Innenseite meist als Türverkleidung bezeichnet wird.

Die vorstehende Beschreibung bezieht sich auf eine Türe. Im Rahmen der Erfindung ist es allerdings möglich, dass ein Kraftfahrzeug, insbesondere ein Fahrerhaus zwei wie zuvor beschriebene, einander gegenüberliegende Türen umfasst.

Die Aufbruchssicherung kann einerseits über die umklappbaren, insbesondere dreh- oder schwenkbaren, Riegel erfolgen.

Die Aufbruchssicherung kann andererseits z. B. wie folgt erfolgen: Ein Sicherungselement (z. B. Ring- oder Hakenschraube) wird an der Festmachstelle der einen Türe befestigt und ein anderes Sicherungselement (z. B. Ring- oder Hakenschraube) wird an der Festmachstelle der anderen Türe befestigt. Die Sicherungselemente dienen dazu, um mittels eines Verbindungsteils (z. B. einem Sicherungsstab, Sicherungsseil, Sicherungskette oder Sicherungsgurt, etc.) miteinander verbunden zu werden, so dass die zwei Türen von Innen gegen Aufbrechen gesichert werden. Wird versucht, eine Türe aufzubrechen, wird das Verbindungsteil auf Zug beansprucht und überträgt die Aufbrechkraft auf das gegenüberliegende Sicherungselement, welches die Aufbrechkraft aufnimmt und somit ein Aufbrechen der Türe verhindert oder zumindest erschwert.

Die Erfindung umfasst ferner ein Kraftfahrzeug und ein Fahrerhaus, vorzugsweise für einen Lastkraftwagen, mit zumindest einer Türe wie hierin offenbart. Das Kraftfahrzeug und das Fahrerhaus umfassen allerdings vorzugsweise zwei einander gegenüberliegende Türen wie hierin offenbart, so dass zwei Festmachstellen ebenfalls einander gegenüberliegend angeordnet sind und die daran befestigbaren Sicherungselemente über ein Verbindungsteil (z. B. einem Sicherungsstab, Sicherungsseil, Sicherungskette oder Sicherungsgurt, etc.) miteinander verbindbar sind, um die zwei Türen von innen gegen Aufbrechen zu sichern.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1a: zeigt eine Ansicht von Innen einer Türe gemäß einer Ausführungsform der Erfindung,
- Figur 1b: zeigt eine Schnittansicht entlang Linie A-A der Figur 1a,
- Figur 2: zeigt eine schematische Ansicht einer Festmachstelle und einer Markierung für eine Türe gemäß einer Ausführungsform der Erfindung,
- Figur 3: zeigt eine schematische Ansicht einer Festmachstellte mit angebrachtem Sicherungselement für eine Türe gemäß einer Ausführungsform der Erfindung, und
- Figur 4: zeigt eine Ansicht von Innen einer Türe gemäß einer Ausführungsform der Erfindung.

Die unter Bezugnahme auf die Figuren beschriebenen Ausführungsformen stimmen teilweise überein, so dass ähnliche oder identische Teile mit dem gleichen Bezugszeichen versehen sind und zu deren Erläuterung auch auf die Beschreibung der anderen Ausführungsformen verwiesen wird, um Wiederholungen zu vermeiden.

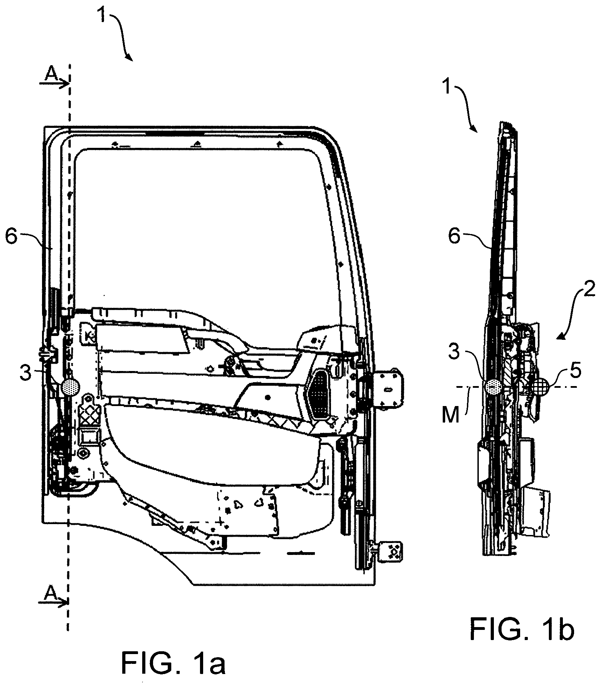

Figur 1a zeigt eine Ansicht von Innen einer Türe 1 insbesondere für ein Fahrerhaus eines Nutzfahrzeugs, vorzugsweise eines Lastkraftwagens, gemäß einer Ausführungsform der Erfindung, während Figur 1b eine zugehörige Schnittansicht entlang Linie A-A aus Figur 1a zeigt. Die Türe 1 wird nachfolgend unter Bezugnahme auf die Figuren 1a und 1b beschrieben.

Die Türe 1 kann zunächst wie in der Regel üblich ein Türschloss zum Verschließen der Türe 1, eine Tür-Tragstruktur 6, insbesondere Tür-Rohbau, und eine Tür-Innenseite 2, insbesondere eine Tür-Innenverkleidung zum Verkleiden der Tür-Tragstruktur 6, umfassen.

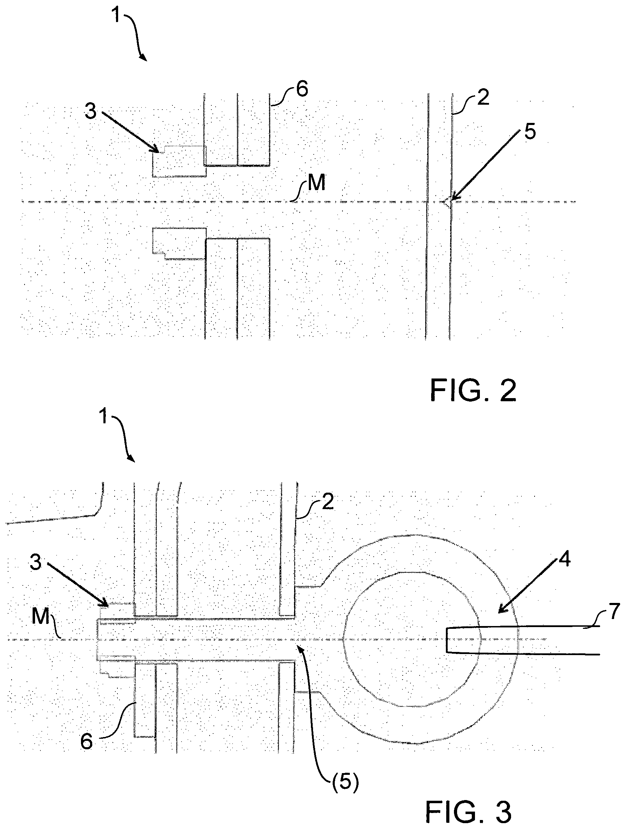

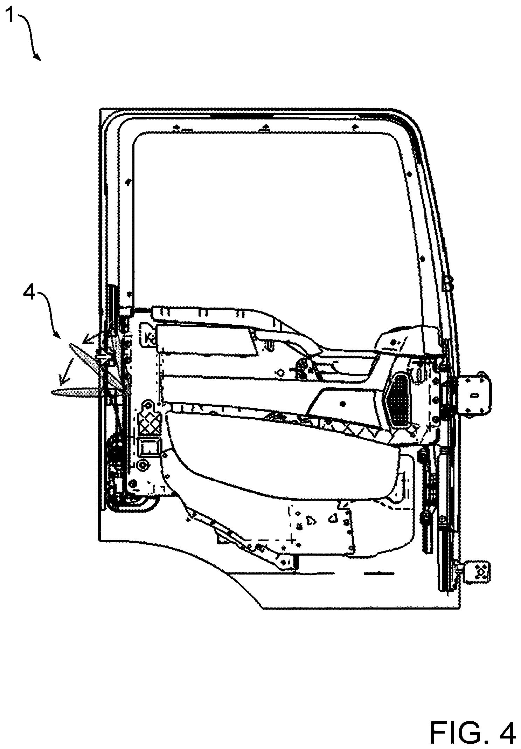

Eine Besonderheit der Türe 1 ist, dass sie eine Festmachstelle 3 für ein Sicherungselement 4 (z. B. Figuren 3 und 4) zum Sichern der Türe 1 von Innen gegen unerlaubtes Aufbrechen aufweist und zwar zusätzlich zu dem eigentlichen Türschloss. Die Tür-Innenseite 2 umfasst zudem eine Markierung 5 zum Auffinden der Festmachstelle 3, hinter der die Festmachstelle 3 angeordnet ist. Die Festmachstelle 3 und die Markierung 5 sind so angeordnet, dass die Mittelachse M der Festmachstelle 3 auf die Markierung 5 trifft, sich zumindest nahezu horizontal erstreckt und zumindest nahezu rechtwinklig auf die Tür-Innenseite 2 trifft. Die Festmachstelle 3 bzw. die Markierung 5 sind in den Figuren 1a und 1b nur schematisch und insbesondere zu Darstellungszwecken vergrößert dargestellt.

Die Festmachstelle 3 umfasst eine Mutter mit Innengewinde, die an der Tür-B-Säule der Tür-Tragstruktur 6 ausgebildet ist.

Die Markierung 5 ist als Körnerpunkt ausgeführt.

Erst wenn der Fahrer die zusätzliche Türinnensicherung benötigt, bohrt er, z. B. mit einer Handbohrmaschine, ein Loch an der Markierung 5 in die Tür-Innenseite 2. Durch die Markierung 5 ist die Position über der Festmachstelle 3 exakt markiert und kann z. B. auf ca. 12mm aufgebohrt werden. Durch das Loch in der Tür-Innenseite 2 kann dann das Sicherungselement 4, z. B. eine Ring- oder Hakenschraube mit Bund oder ein drehbarer Riegel, an der Festmachstelle 3 befestigt werden. Die Türinnensicherung kann zweckmäßig nur von Innen betätigt werden.

Figur 2 zeigt eine schematische Ansicht einer Festmachstelle 3 und einer Markierung 5 für eine Türe 1 gemäß einer Ausführungsform der Erfindung.

Figur 3 zeigt eine schematische Ansicht einer Festmachstelle 3 mit montiertem Sicherungselement 4 für eine Türe 1 gemäß einer Ausführungsform der Erfindung. Das Sicherungselement 4 ist als Ringschraube ausgeführt, die in die Mutter 3 geschraubt ist. Die Markierung 5 ist weggeschraubt und deshalb in Figur 3 in Klammern gesetzt.

Die Aufbruchssicherung wird wie folgt realisiert: Ein Fahrerhaus umfasst zwei einander gegenüberliegende Türen 1. Eine Ringschraube 4 wird an der Festmachstelle 3 der einen Türe 1 des Fahrerhauses befestigt und eine andere Ringschraube 4 wird an der Festmachstelle 3 der anderen Türe 1 befestigt. Die Ringschrauben 4 dienen dazu, um mittels eines Verbindungsteils 7 (z. B. ein Sicherungsstab, Sicherungsseil, Sicherungskette oder Sicherungsgurt, etc.) miteinander verbunden zu werden, so dass die zwei Türen 1 von Innen gegen Aufbrechen gesichert werden. Wird versucht, eine der Türen 1 aufzubrechen, wird das Verbindungsteil 7 auf Zug beansprucht und überträgt die Aufbrechkraft auf die gegenüberliegende Ringschraube 4, welches die Aufbrechkraft aufnimmt und an die zugehörige Türe 1 weitergibt und somit ein Aufbrechen der quasi anderen Türe 1 verhindert oder zumindest erschwert.

Figur 4 zeigt eine Ansicht von Innen einer Türe 1 gemäß einer anderen Ausführungsform der Erfindung.

Eine Besonderheit der Türe 1 der Figur 4 ist, dass das Sicherungselement 4 keine Ringschraube ist, sondern ein umklappbarer Riegel 4, der in eine Sicherungsstellung klappbar ist, um mit einem fahrerhausfesten Teil zu verriegeln. Ein Vorteil dieser Ausführungsform ist, dass zwei Türen 1 eines Fahrerhauses unabhängig voneinander gegen Aufbrechen gesichert werden können und ein wie in Figur 3 gezeigtes Verbindungsteil 7 nicht erforderlich ist.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Türe
- 2: Tür-Innenseite, insbesondere Tür-Innenverkleidung
- 3: Festmachstelle
- 4: Sicherungselement
- 5: Markierung
- 6: Tür-Tragstruktur, insbesondere Türrohbau
- 7: Verbindungselement
- M: Mittelachse der Festmachstelle

## Patentansprüche

1. Türe (1) für ein Kraftfahrzeug, insbesondere für ein Fahrerhaus eines Nutzfahrzeugs, mit: einem Türschloss zum Verschließen der Türe (1) und einer Tür-Innenseite (2), wobei die Türe (2) eine Festmachstelle (3) für ein Sicherungselement (4) zum Sichern der Türe (1) gegen unerlaubtes Aufbrechen zusätzlich zu dem Türschloss aufweist und die Festmachstelle (3) hinter der Tür-Innenseite (2) angeordnet ist, wobei die Türe (2) eine Tür-Tragstruktur (6) mit einer Säule aufweist und die Festmachstelle (3) an der Säule der Tür-Tragstruktur (6) ausgebildet ist, wobei die Tür-Innenseite (2) eine Markierung (5) zum Auffinden der Festmachstelle (3) aufweist, **dadurch gekennzeichnet, dass** die Mittelachse (M) der Festmachstelle (3) auf die Markierung (5) trifft, wobei die Festmachstelle (3) ein Innengewinde umfasst oder eine Mutter ist.

2. Türe (1) nach Anspruch 1, **dadurch gekennzeichnet, dass** die Festmachstelle (3) hinter der Markierung (5) angeordnet ist.

3. Türe (1) nach Anspruch 1 oder 2, **dadurch gekennzeichnet, dass** die Mittelachse (M) der Festmachstelle (3)
- sich zumindest nahezu horizontal erstreckt und/oder
- zumindest nahezu rechtwinklig auf die Tür-Innenseite (2) trifft.

4. Türe (1) nach einem der vorhergehenden Ansprüche, **dadurch gekennzeichnet, dass** die Markierung (5) mechanisch ausgeführt ist und/oder farblich gekennzeichnet ist.

5. Türe (1) nach einem der vorhergehenden Ansprüche, **dadurch gekennzeichnet, dass** die Markierung (5) einen Körnerpunkt oder eine andere Vertiefung umfasst.

6. Türe (1) nach einem der vorhergehenden Ansprüche, **dadurch gekennzeichnet, dass** das Sicherungselement (4) ein Außengewinde umfasst.

7. Türe (1) nach einem der vorhergehenden Ansprüche, **dadurch gekennzeichnet, dass** das Sicherungselement (4) ein an der Festmachstelle (3) befestigbares Ring- oder Hakenteil ist, vorzugsweise mit Bund.

8. Türe (1) nach einem der Ansprüche 1 bis 6 **dadurch gekennzeichnet, dass** das Sicherungselement (4) ein an der Festmachstelle (3) befestigbarer, umklappbarer Riegel ist, der in eine Sicherungsstellung umlegbar ist, um zweckmäßig mit einem fahrerhausfesten Teil zu verriegeln.

9. Türe (1) nach einem der vorhergehenden Ansprüche, **dadurch gekennzeichnet, dass** die Türe (1) eine Tür-Tragstruktur (6) aufweist und die Festmachstelle (3) an der Tür-Tragstruktur (6) ausgebildet ist.

10. Türe (1) nach einem der vorhergehenden Ansprüche, **dadurch gekennzeichnet, dass** die Festmachstelle (3) an der Tür-B-Säule der Tür-Tragstruktur (6) ausgebildet ist.

11. Kraftfahrzeug, mit zumindest einer Türe (1) nach einem der vorhergehenden Ansprüche.

12. Fahrerhaus für ein Nutzfahrzeug, vorzugsweise einen Lastkraftwagen, mit zumindest einer Türe (1) nach einem der Ansprüche 1 bis 10.

13. Kraftfahrzeug nach Anspruch 11 oder Fahrerhaus nach Anspruch 12, mit zwei Türen (1) nach einem der Ansprüche 1 bis 10, so dass zwei Festmachstellen (3) einander gegenüberliegend angeordnet sind und die daran befestigbaren Sicherungselemente (4) über ein Verbindungsteil (7) miteinander verbindbar sind, um die zwei Türen (1) von innen gegen Aufbrechen zu sichern.

## Claims

1. A door (1) for a motor vehicle, in particular for a driver's cab of a commercial vehicle, having: a door lock for locking the door (1) and a door inner side (2), wherein the door (2) has a fixing point (3) for a securing element (4) for securing the door (1) against illegal break-in, in addition to the door lock, and the fixing point (3) is arranged behind the door inner side (2), wherein the door (2) has a door supporting structure (6) with a pillar, and the fixing point (3) is formed on the pillar of the door supporting structure (6), wherein the door inner side (2) has a marker (5) for locating the fixing point (3), **characterized in that** the central axis (M) of the fixing point (3) coincides with the marker (5), wherein the fixing point (3) comprises an internal thread or is a nut.

2. The door (1) according to Claim 1, **characterized in that** the fixing point (3) is arranged behind the marker (5).

3. The door (1) according to Claim 1 or 2, **characterized in that** the central axis (M) of the fixing point (3)
- extends at least approximately horizontally and/or
- meets the door inner side (2) at least approximately at a right angle.

4. The door (1) according to one of the preceding claims, **characterized in that** the marker (5) is configured mechanically and/or is colour-marked.

5. The door (1) according to one of the preceding claims, **characterized in that** the marker (5) comprises a punch point or another depression.

6. The door (1) according to one of the preceding claims, **characterized in that** the securing element (4) comprises an external thread.

7. The door (1) according to one of the preceding claims, **characterized in that** the securing element (4) is a ring part or hook part, preferably with collar, that can be fastened to the fixing point (3) .

8. The door (1) according to one of Claims 1 to 6, **characterized in that** the securing element (4) is a foldable bolt which can be fastened to the fixing point (3) and which can be folded down into a securing position in order to expediently lock with a part fixed relative to the driver's cab.

9. The door (1) according to one of the preceding claims, **characterized in that** the door (1) has a door supporting structure (6), and the fixing point (3) is formed on the door supporting structure (6).

10. The door (1) according to one of the preceding claims, **characterized in that** the fixing point (3) is formed on the door B-pillar of the door supporting structure (6).

11. A motor vehicle, having at least one door (1) according to one of the preceding claims.

12. A driver's cab for a commercial vehicle, preferably a lorry, having at least one door (1) according to one of Claims 1 to 10.

13. The motor vehicle according to Claim 11 or driver's cab according to Claim 12, having two doors (1) according to one of Claims 1 to 10 such that two fixing points (3) are arranged opposite one another and the securing elements (4) which can be fastened thereto can be connected to one another via a connecting part (7) in order to secure the two doors (1) from within against break-in.

## Revendications

1. Porte (1) pour un véhicule automobile, en particulier pour une cabine de conducteur d'un véhicule utilitaire, comprenant : une serrure de porte pour fermer la porte (1) et un côté intérieur de porte (2), la porte (2) présentant une zone d'ancrage (3) pour un élément de sécurisation (4) pour protéger la porte (1) contre une infraction non autorisée en plus de la serrure de porte et la zone d'ancrage (3) étant disposée derrière le côté intérieur de porte (2), la porte (2) présentant une structure de support de porte (6) avec une colonne et la zone d'ancrage (3) étant réalisée au niveau de la colonne de la structure de support de porte (6), le côté intérieur de porte (2) présentant un marquage (5) pour localiser la zone d'ancrage (3),
**caractérisée en ce que**
l'axe médian (M) de la zone d'ancrage (3) intersecte le marquage (5), la zone d'ancrage (3) comprenant un filetage intérieur ou étant un écrou.

2. Porte (1) selon la revendication 1, **caractérisée en ce que** la zone d'ancrage (3) est disposée derrière le marquage (5).

3. Porte (1) selon la revendication 1 ou 2, **caractérisée en ce que** l'axe médian (M) de la zone d'ancrage (3)
- s'étend au moins approximativement horizontalement et/ou
- intersecte au moins pratiquement à angle droit le côté intérieur de porte (2).

4. Porte (1) selon l'une quelconque des revendications précédentes, **caractérisée en ce que** le marquage (5) est réalisé mécaniquement et/ou présente une couleur distinctive.

5. Porte (1) selon l'une quelconque des revendications précédentes, **caractérisée en ce que** le marquage (5) comprend un relief à micro-percussion ou un autre renfoncement.

6. Porte (1) selon l'une quelconque des revendications précédentes, **caractérisée en ce que** l'élément de sécurisation (4) comprend un filetage extérieur.

7. Porte (1) selon l'une quelconque des revendications précédentes, **caractérisée en ce que** l'élément de sécurisation (4) est une partie annulaire ou en forme de crochet pouvant être fixée à la zone d'ancrage (3), de préférence avec un épaulement.

8. Porte (1) selon l'une quelconque des revendications 1 à 6, **caractérisée en ce que** l'élément de sécurisation (4) est un verrou rabattable, pouvant être fixé à la zone d'ancrage (3), qui peut être replié dans une position de sécurisation pour se verrouiller de manière judicieuse à une partie fixe du de la cabine de conducteur.

9. Porte (1) selon l'une quelconque des revendications précédentes, **caractérisée en ce que** la porte (1) présente une structure de support de porte (6) et la zone d'ancrage (3) est réalisée au niveau de la structure de support de porte (6).

10. Porte (1) selon l'une quelconque des revendications précédentes, **caractérisée en ce que** la zone d'ancrage (3) est réalisée au niveau de la colonne B de porte de la structure de support de porte (6).

11. Véhicule automobile comprenant au moins une porte (1) selon l'une quelconque des revendications précédentes.

12. Cabine de conducteur pour un véhicule utilitaire, de préférence un véhicule poids-lourds comprenant au moins une porte (1) selon l'une quelconque des revendications 1 à 10.

13. Véhicule automobile selon la revendication 11 ou cabine de conducteur selon la revendication 12, comprenant deux portes (1) selon l'une quelconque des revendications 1 à 10 de telle sorte que deux zones d'ancrage (3) soient disposées à l'opposé l'une de l'autre et que les éléments de sécurisation (4) pouvant être fixés à celles-ci puissent être connectés l'un à l'autre par une pièce de connexion (7) afin de sécuriser les deux portes de (1) l'intérieur contre une infraction.
